# EUROPEAN PATENT APPLICATION

(11) **EP 1 574 989 A2**
(43) Date of publication of application: **14.09.2005**
(21) Application number: 05101481.9
(22) Date of filing: 25.02.2005
(51) Int. Cl.: G06K 13/08

(54) **Memory Card Slot and Door**

(30) Priority: 10.03.2004 KR 2004016015
(71) Applicant: SAMSUNG ELECTRONICS CO., LTD., Gyeonggi-do 442-742 (KR)
(72) Inventor: Kim, Nam-il, Jangan-gu, Suwon-si Gyeonggi-do (KR)
(74) Representative: Geary, Stuart Lloyd

(57) **Abstract**

A door device to open and close a memory card slot of an image photographing apparatus has a door rotatably disposed at an entrance of the memory card slot to open and close the slot. The door is elastically biased in the direction of closing the slot entrance. The door has at least one friction pad for holding the memory card of the slot by friction force. Therefore, friction force is applied by friction pads of the door to a memory card inserted in the slot such that the memory card may be prevented from moving out of the normal position during use.

## Description

The present invention relates to an apparatus having a memory card slot and a door operable to cover the slot.

The electronics market has been developed to, reduce the size of, increase the storage capacity in and integrate multimedia into, products. For example, products such as notebooks (NB's), computer peripherals, personal data assistants (PDA's), web pads or tablets, digital cameras and digital camcorders are getting smaller, while having increased data storage capability.

There are presently many types of memory cards, such as MS (Memory Stick) cards, SD (Secure Digital) cards, CF (Compact Flash) cards, MMC (Multi-Media Cards) and SM (Smart Media) cards. These cards are small and consume less power, whilst also providing the additional advantages of more reliable data storage, high data transmission rates, reusability, and resilience to damp and dust.

Known image photographing apparatuses, such as digital camcorders, not only capture moving images but also has the ability to function as a still camera. A moving image is captured and is represented as a magnetic signal which is recorded onto a magnetic tape, whereas a still image is converted into a PCM digital signal and is recorded to an aforementioned memory card. As the still image is recorded to a memory card, the still image can be retrieved and can be processed by any suitable application.

In order to use the various memory cards as a subsidiary recording media, the camcorder has a slot in which the memory card is received and a multi-card socket allowing data processing of the memory card inserted in the slot.

A hinged door is placed at an entrance of the slot, and the door is biased so that the door is closed, thus covering the slot entrance. The biasing is achieved by using an appropriate device, such as a spring. Therefore, when a memory card is not used, the door is closed, covering the slot. This stops external substances, such as dust, from entering the slot. When the memory card is in the slot, the door is inwardly rotated by outer force and, therefore, the slot is opened.

The camcorder as described above holds a memory card in the slot only by virtue of the multi-card socket. This means that mounting of the card may be so unsteady that the memory card separates from the socket during use. As the use of memory cards having varying thicknesses and widths in a single multi-card socket increases, the reliability of the mounting and dismounting of the memory card is reduced, and the memory card frequently separates from its normal position during use.

If a memory card does separate from the socket when in use, an error will occur in the stored information. Accordingly, a need exists to prevent the memory card from deviating from its normal position during use.

The present invention relates to an apparatus having a memory card slot and a door operable to cover the slot.

The apparatus according to the present invention is characterised by biasing means configured to press the door against a memory card located within the slot.

Additional preferred and optional features are set forth in claims 2 and 3 appended hereto.

An embodiment of the present invention will now be described, by way of example only, and with reference to the accompanying drawings, in which:
Figure 1 is a perspective view of an image photographing apparatus having a door device for opening and closing the memory card slot according to an embodiment of the present invention;
Figure 2 is an exploded perspective view in partial cross section of a door device for opening and closing a memory card slot of the image photographing apparatus of Figure 1; and
Figure 3 is a perspective view of a door having first and second pairs of friction pads according to the present invention.

Throughout the drawings, like reference numerals will be understood to refer to like parts, components and structures. Descriptions of well-known functions or constructions are omitted for brevity.

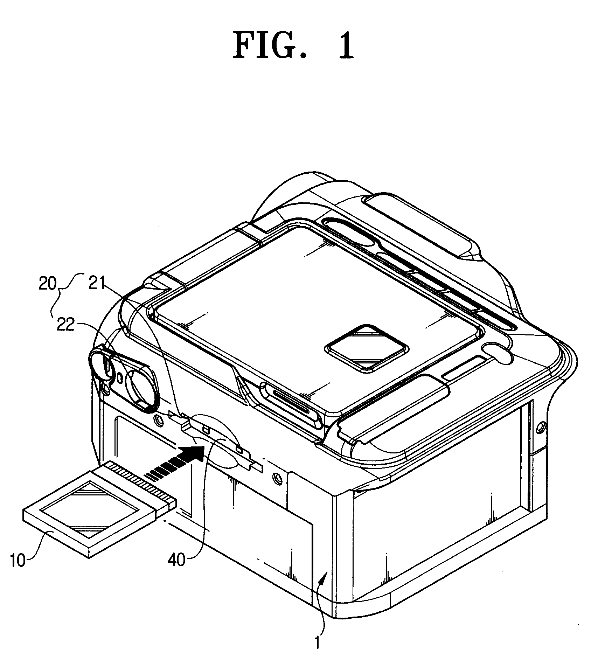

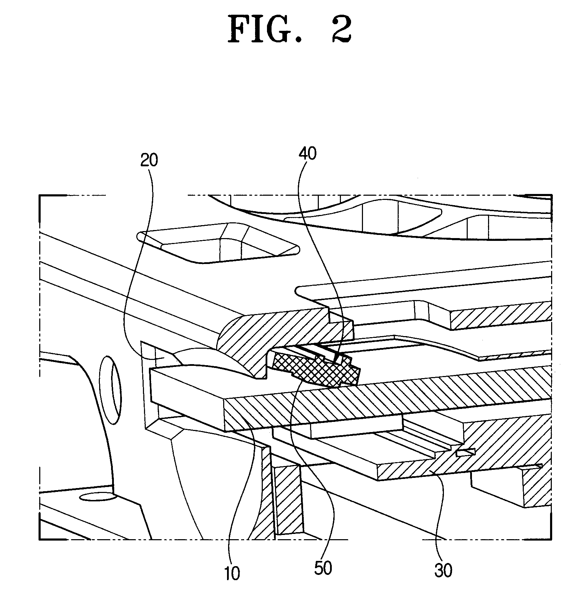

Referring to Figure 1, slots 20 are configured at one side of an image photographing device (such as a digital camcorder) main body 1. A memory card 10 is inserted through the slots 20 to connect with a multi-card socket 30 located in the camcorder main body 1, as shown in Figure 2.

Many types of memory cards 10, such as, *inter alia,* MS, SD, MMC, SM, may be used. Each of these cards has varying thicknesses and widths. The slots 20 may be adapted to receive the various sized memory cards 10. The first slot 21 is adapted to receive a thick and narrow memory card, such as a MS card. The second slot 22 is adapted to receive a thin and wide memory card, such as an SD card.

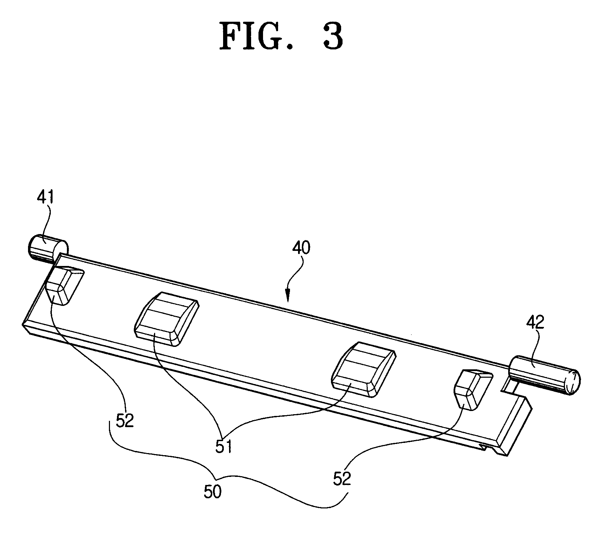

A door 40 is located at the entrance of the slots 20 and rotates to open or close the slots 20. The door 40 rotates using a pair of hinges 41 and 42 (refer to Figure 3) disposed at either side of the door 40. Normally, when an external force is not applied to the door 40, the door 40 is closed, covering the entrance of the slot 20. This is because the door 40 is provided with an elastic member which biases the door in the closed position. The elastic member is not indicated, but may be formed by a spring pin operating on the hinges.

The door 40 has at least one friction pad 50 located thereon to hold the memory card in place using friction. This prevents the memory card 10 from moving out of the slot 20 when small shocks are applied during use. In addition, the friction pad 50 facilitates the opening and closing of the door 40 over the entrance of the slot 20 according to an embodiment of the present invention.

The friction pads 50 have a pair of first and second friction pads 51,52. The pair of first friction pads 51 are located a first distance from one lengthwise edge (opposite the edge locating the hinges 41,42) of the door 40, as shown in Figure 3. The pair of second friction pads 52 are located at a further distance from the lengthwise edge of the door 40 compared to the first friction pads 51. The pair of second friction pads 52 are located a distance away from the pair of first friction pads 51, with the first friction pads 51 being preferably positioned therebetween.

The first friction pads 51 frictionally contact one side of a thick and narrow memory card 10, such as an MS card, inserted in the first slot 21. The second friction pads 52 frictionally contact one side of a thin and wide memory card, such as an SD card, inserted in the second slot 22.

The friction pad 50 may be integrally formed in the surface of the door 40 by injection moulding. Alternatively, a separate friction pad 50 may be securely attached to a surface of the door 40. Preferably, a high-frictional member, such as rubber, is integrally formed with the door 40 using double injection moluding.

A door device which opens and closes over a memory card slot of an image photographing apparatus (such as a camcorder) according to an embodiment of the present invention is located at the entrance of a slot 20. Preferably, the door device is a hinged door, but any suitable door device may be used. Therefore, when a memory card is not used, the door is biased closed over the slot 20 such that external substances are prevented from entering the slot 20.

When a memory card 10 is pushed into the slot 20, the door 40 is rotated inwardly and then the memory card 10 is inserted in the slot 20. The memory card 10 inserted in the slot 20 is connected with a multi-card socket of the slot 20.

The door 40 rotated inwardly by the insertion of the memory card 10 is subjected to a reverse (outward) rotation force by an elastic member elastically biasing the door towards the closed direction, thereby causing the door to contact a surface of the memory card 10. The friction pad 50 frictionally contacts the surface of the memory card 10, thereby holding the memory card 10 in position.

Frictional force from the friction pad 50 is applied to the memory card 10 located in the slot 20 in addition to the force between the memory card and the multi-card socket, thereby stably mounting the memory card 10 in the slot 20. This prevents the memory card 10 from separating from the slot 20 when small shocks are applied during use of the camcorder.

Two pairs of friction pads 51 and 52 are mounted on the door 40. These pads are of differing distances from one lengthwise edge of the door 40 and are spaced apart to not only receive and apply the frictional force to a thick and narrow memory card, such as an MS card, but also a thin and wide memory card, such as an SD card. The frictional force being applied to the memory card is substantially uniform.

As described above, when various sized memory cards are used as a subsidiary (or indeed the main) recording media, a door frictionally holds the memory card which has been inserted in the slot to prevent the card from moving out of the normal position during use.

An error, such as an image information recording error, which may occur when a memory card is separated from a slot while the camcorder is used, may be prevented, thereby increasing consumer satisfaction.

## Claims

1. An apparatus (1) having a memory card slot (20) and a door (40) operable to cover the slot (20), **characterised by** biasing means configured to press the door (40) against a memory card (10) located within the slot (20).

2. An apparatus according to claim 1, wherein the door (40) comprises securing means (50) for engaging with the memory card (10) to secure the card (10) in position.

3. An apparatus according to claim 2, wherein the securing means (50) comprises at least one pad (51,52) which frictionally engages the memory card (10) to secure the card (10) in position.

4. A door device to open and close a memory card slot of an image photographing apparatus, comprising:
a door rotatably disposed at an entrance of the memory card slot to open and close the slot, the door being elastically biased in the direction of closing the slot entrance; and
at least one first friction pad on the door adapted to frictionally hold a memory card inserted in the slot.

5. The door device according to claim 4, wherein
a pair of the first friction pads are formed on the door and spaced apart.

6. The door device according to claim 4, wherein
a pair of the first friction pads having a first height are spaced apart on the door; and
a pair of the second friction pads having a second height larger than the first height of the pair of the first friction pads are spaced apart from the pair of the first friction pads on the door.

7. The door device according to claim 6, wherein
the pair of the first friction pads are positioned between the pair of the second friction pads.

8. The door device according to claim 4, wherein
the at least one friction pad is integrally formed with the door.

9. The door device according to claim 6, wherein
the pair of the first friction pads and the pair of the second friction pads are integrally formed with the door.

10. The door device according to claim 6, wherein
the pair of the first friction pads have a first width larger than a second width of the pair of the second friction pads.

11. The door device according to claim 4, wherein
the door closes the memory card slot in a first position when a memory card is not inserted in the slot, and the door rotates inwardly to a second position to frictionally engage the memory card inserted in the slot.

12. The door device according to claim 9, wherein
the pairs of the first and second friction pads and the door are made of rubber.

13. The door device according to claim 6, wherein
the pairs of the first and second friction pads are spaced to accommodate various sized memory cards.

14. A method of opening and closing a memory card slot of an image photographing apparatus, comprising the steps of
inserting a memory card into the memory card slot;
rotating a door covering the memory card slot with the memory card; engaging the memory card with a socket disposed in the slot; and
contacting the memory card with at least one friction pad on the door to frictionally secure the memory card within the slot.

15. The method of opening and closing a memory card slot of an image photographing apparatus of claim 14, further comprising:
elastically biasing the door toward the inserted memory card.

16. The method of opening and closing a memory card slot of an image photographing apparatus of claim 15, further comprising:
elastically biasing the door toward a closed position when the memory card is removed from the slot.
